# EUROPÄISCHE PATENTSCHRIFT

(11) **EP 1 361 514 B1**
(45) Veröffentlichungstag und Bekanntmachung des Hinweises auf die Patenterteilung: **11.07.2012**
(21) Anmeldenummer: 02405370.4
(22) Anmeldetag: 06.05.2002
(51) Int. Cl.: G06F 9/50

(54) **System und Verfahren zum Verwalten von Ressourcen von tragbaren Ressourcenmodulen**
System and method for managing resources of portable resource modules
Système et procédé pour gérer les ressources de modules de ressources portables

(43) Veröffentlichungstag der Anmeldung: 12.11.2003
(73) Patentinhaber: Swisscom AG, 3050 Bern (CH); Nagravision S.A., 1033 Cheseaux-sur-Lausanne (CH)
(72) Erfinder: Cantini, Renato, 1782 Belfaux (CH); Lagadec, Roger, 8105 Regensdorf (CH); Busch Lauper, Karin, 3014 Bern (CH)
(74) Vertreter: Rentsch Partner AG

(56) Entgegenhaltungen:
- EP-A- 0 817 041
- WO-A-01/29686
- WO-A-99/53401
- GB-A- 2 342 470
- US-A- 6 128 690

## Beschreibung

### Technisches Gebiet

Die vorliegende Erfindung betrifft ein System, ein Verfahren und eine Verwaltungszentrale zum Verwalten von Ressourcen von tragbaren Ressourcenmodulen. Die Erfindung betrifft insbesondere ein System, ein Verfahren und eine Verwaltungszentrale zum Verwalten von Ressourcen von einer Vielzahl von tragbaren Ressourcenmodulen, die jeweils mit einem Kommunikationsendgerät verbunden sind, die jeweils einen Ressourcenkontrollmechanismus zur Bereitstellung und Freigabe von Ressourcen im betreffenden Ressourcenmodul umfassen, wobei die Ressourcen elektronische Speichereinheiten umfassen, und die insbesondere als Chipkarten ausgestaltet sind.

### Stand der Technik

Tragbare Ressourcenmodule, die elektronische Daten- und Programmspeicher sowie einen oder mehrere Prozessoren umfassen, sind bekannt und werden herkömmlicherweise mit Schnittstellen zur entfernbaren Verbindung mit einer Wirtsvorrichtung ausgestaltet. Über diese entfernbare Verbindung können ein tragbares Ressourcenmodul und eine Wirtsvorrichtung zur temporären Interaktion und Kooperation zusammengeschaltet werden. Die Wirtsvorrichtung kann beispielsweise auf Datenspeicher im tragbaren Ressourcenmodul zugreifen oder mit einer Softwareapplikation kooperieren, die auf einem Prozessor des tragbaren Ressourcenmoduls ausgeführt wird. Die bekannten tragbaren Ressourcenmodule sind typischerweise in der Form von so genannten Chipkarten ausgeführt, sie können aber auch anders ausgestaltet sein, beispielsweise als so genannte elektronische Tokens. Zu den bekanntesten Chipkarten gehören die SIM-Karte (Subscriber Identity Module), die als Identifizierungs- und Authentifizierungsmodul entfernbar mit einem Mobilfunktelefon verbindbar ist, und die Bankomatkarte, die entfernbar mit Bankomaten oder so genannten ATMs (Automatic Teller Machine) verbindbar ist. Mit dem Fortschritt in der Miniaturisierung von elektronischen Komponenten konnte die Speicherkapazität und die Prozessorleistung von tragbaren Ressourcenmodulen ständig vergrössert werden, so dass es realistisch wurde, die Ressourcenmodule nicht bloss für eine dedizierte Anwendung sondern für mehrere Anwendungen zu verwenden. Insbesondere in Verbindung mit Kommunikationsendgeräten, mit vernetzten Wirtsvorrichtungen und mit geeigneten Schreibvorrichtungen wurde es zudem für berechtigte Parteien möglich, zusätzliche Softwareapplikationen dynamisch auf die tragbaren Ressourcenmodule zu übertragen, dort zu speichern und auf dem lokalen Prozessor auszuführen. Dadurch entstanden jedoch vermehrt Sicherheitsprobleme, da die Möglichkeit bestand, dass zusätzlich geladene Softwareapplikationen unberechtigterweise auf Daten anderer Softwareapplikationen im tragbaren Ressourcenmodul zugreifen konnten.

In der Patentanmeldung EP 908855 wird ein Ressourcenkontrollmechanismus für Chipkarten mit mehreren Softwareapplikationen beschrieben, der Ressourcen für die Softwareapplikationen in der Chipkarte bereitstellt und verhindert, dass Softwareapplikationen unberechtigterweise auf Daten anderer Softwareapplikationen in der Chipkarte zugreifen. Wenn die Chipkarte mit einer Wirtsvorrichtung verbunden wird, ermöglicht der Ressourcenkontrollmechanismus gemäss EP 908855 Anforderungen für die Ausführung der Softwareapplikationen von der Wirtsvorrichtung entgegenzunehmen, mittels einer in der Chipkarte gespeicherten Speicherbereichstabelle einen Speicherbereich für die Speicherung und die Ausführung (inklusive Datenspeicherung) einer betreffenden Softwareapplikation als Ressourcen bereitzustellen, und zu kontrollieren, dass die betreffende Softwareapplikation in den dafür bereitgestellten Ressourcen ausgeführt wird. Der Ressourcenkontrollmechanismus gemäss EP 908855 kann allerdings nicht verhindern, dass redundante, das heisst bereits vorhandene, Softwareapplikationen in die Chipkarte geladen werden oder dass unnötige Ladeversuche für zusätzliche Softwareapplikationen unternommen werden, wenn auf der Chipkarte dafür keine Ressourcen verfügbar sind. Dies ist insbesondere dann von Nachteil, wenn Softwareapplikationen über ein Kommunikationsnetz auf eine Vielzahl von Ressourcenmodulen geladen werden sollen, da dabei unnötig Netzwerk- und Speicherkapazität verschwendet wird.

WO 91/29686 beschreibt ein Verfahren zum Quantifizieren von Ressourcen in einer elektronischen Vorrichtung. WO 91/29686 hält insbesondere fest, dass ein elektronisches Netzwerk im Heimbereich, z.B. ein serieller Bus gemäss IEEE 1394, eingerichtet werden kann, um Daten und Geräteressourcen unter verschiedenen Vorrichtungen der Unterhaltungselektronik, wie Fernsehgeräte, Musikanlagen, DVD-Geräte oder Personal Computers, gemeinsam zu nutzen. Gemäss WO 91/29686 sind in einem Speicher der elektronischen Vorrichtungen jeweils für isochrone Prozesse, welche bevorzugt in definierten Zyklen ausgeführt werden, Angaben von Hardware und Hardware Ressourcen gespeichert, welche zum Erreichen bestimmter Performanzkriterien der betreffenden isochronen Prozesse erforderlich sind. Nach WO 91/29686 erzeugt eine Vorrichtungs-Software in der elektronischen Vorrichtung eine Anforderung eines isochronen Prozesses an einen Ressourcenmanager der elektronischen Vorrichtung. Der Ressourcenmanager ermittelt aufgrund der gespeicherten Ressourcenerfordernisse die für die Ausführung des isochronen Prozesses benötigten Ressourcen und gibt der Vorrichtungs-Software in der elektronischen Vorrichtung die Instantiierung des angeforderten Prozesses frei, sofern diese Ressourcen verfügbar sind. Danach aktualisiert der Ressourcenmanager im Speicher der elektronischen Vorrichtung die Verfügbarkeit der benutzten Ressourcen.

### Darstellung der Erfindung

Es ist eine Aufgabe der vorliegenden Erfindung, ein neues System, ein Verfahren und eine Verwaltungszentrale zum Verwalten von Ressourcen von tragbaren Ressourcenmodulen vorzuschlagen, welche nicht die Nachteile des Stands der Technik aufweisen und welche insbesondere die Verwaltung von Ressourcen von einer Vielzahl von tragbaren Ressourcenmodulen ermöglichen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die tragbaren Ressourcenmodule, die insbesondere als Chipkarten ausgestaltet sind, sind jeweils mit einem Kommunikationsendgerät verbunden und umfassen jeweils einen Ressourcenkontrollmechanismus zur Bereitstellung und Freigabe von Ressourcen im betreffenden Ressourcenmodul, wobei die Ressourcen elektronische Speichereinheiten umfassen.

Die oben genannten Ziele werden durch die vorliegende Erfindung insbesondere dadurch erreicht, dass eine erste Ressourcenverwaltungsinstruktion, die eine Modulidentifizierung umfasst, das heisst eine erste Anforderung zur Bereitstellung oder Freigabe von Hardwareressourcen, z.B. Speicherplatz, oder Softwareressourcen, z.B. Softwareapplikationen, an eine Ressourcenverwaltungszentrale übermittelt wird, dass eine zweite Ressourcenverwaltungsinstruktion von der Ressourcenverwaltungszentrale über ein Kommunikationsnetz an das durch die Modulidentifizierung bestimmte Ressourcenmodul übermittelt wird, dass Ressourcen durch einen Ressourcenkontrollmechanismus im bestimmten Ressourcenmodul entsprechend der empfangenen zweiten Ressourcenverwaltungsinstruktion bereitgestellt oder freigegeben werden, dass eine Ressourcenverwaltungsbestätigung vom bestimmten Ressourcenmodul über das Kommunikationsnetz an die Ressourcenverwaltungszentrale übermittelt wird, und dass Informationen über die bereitgestellten oder freigegebenen Ressourcen in der Ressourcenverwaltungszentrale der Modulidentifizierung zugeordnet gespeichert werden. Der Vorteil, Anforderungen zur Bereitstellung oder Freigabe von Ressourcen eines tragbaren Ressourcenmoduls über eine Ressourcenverwaltungszentrale zu leiten und dort für die betreffenden Ressourcenmodule Informationen über die bereitgestellten oder freigegebenen Ressourcen zu speichern besteht darin, dass die Ressourcen sämtlicher teilnehmenden Ressourcenmodule oder zumindest festgelegte Teile dieser Ressourcen zentralisiert verwaltet werden können. Das heisst, in der Ressourcenverwaltungszentrale kann festgehalten werden, welche Speicherbereiche eines bestimmten Ressourcenmoduls bereits bereitgestellt, das heisst belegt oder reserviert, oder noch frei sind, und welche Softwareapplikationen bereitgestellt, das heisst geladen, sind. Dadurch wird eine zentralisierte Verteilung und Aktualisierung von Softwareapplikationen in den tragbaren Ressourcenmodulen ermöglicht, ohne dass bereits vorhandene Applikationen erneut geladen werden und ohne dass unnötige Ladeversuche über das Kommunikationsnetz unternommen werden müssen, wenn der dafür notwendige Speicherplatz nicht frei ist. Die zentralisierte Verwaltung der Ressourcen von Ressourcenmodulen ermöglicht zudem Ressourcen für die Benutzung durch eine Drittpartei für diese Drittpartei bereitzustellen. Beispielsweise kann in den Ressourcenmodulen ein festgelegter Speicherbereich für Softwareapplikationen einer interessierten Drittpartei reserviert werden.

In einer Ausführungsvariante werden vom Benutzer des Kommunikationsendgeräts die Modulidentifizierung und eine Applikationsanforderung an eine Applikationsverwaltungseinheit übermittelt, die erste Ressourcenverwaltungsinstruktion wird auf Grund der empfangenen Applikationsanforderung durch die Applikationsverwaltungseinheit an die Ressourcenverwaltungszentrale übermittelt, wobei die erste Ressourcenverwaltungsinstruktion eine Ressourcenbenutzeridentifizierung umfasst, und die Ressourcenbenutzeridentifizierung wird in der Ressourcenverwaltungszentrale der Modulidentifizierung zugeordnet gespeichert. Der Vorteil, die Applikationsanforderung und die Modulidentifizierung über eine Applikationsverwaltungseinheit an die Ressourcenverwaltungszentrale zu leiten besteht darin, dass die Benutzer verschiedene Softwareapplikationen von mehreren unabhängigen Anbietern anfordern können, die jeweils eine Applikationsverwaltungseinheit betreiben, wobei diese Anbieter die zentralisierten Dienste der gemeinsamen Ressourcenverwaltungszentrale beanspruchen können, wo sie als Ressourcenbenutzer registriert sind.

In einer Ausführungsvariante wird von der Ressourcenverwaltungszentrale eine Ressourcenbereitstellungsbestätigung an die Applikationsverwaltungseinheit übermittelt, von der Applikationsverwaltungseinheit wird eine Applikationsinstallationsanforderung über das Kommunikationsnetz an das bestimmte Ressourcenmodul übermittelt, durch den Ressourcenkontrollmechanismus im bestimmten Ressourcenmodul wird entsprechend der Applikationsinstallationsanforderung unter Verwendung der bereitgestellten Ressourcen eine Applikation installiert, und in der Applikationsverwaltungseinheit werden Informationen über die installierte Applikation gespeichert, wobei die Informationen der Modulidentifizierung zugeordnet gespeichert werden. Der Vorteil dieser Ausführungsvariante besteht darin, dass der Betreiber der Applikationsverwaltungseinheit, typischerweise der Anbieter von Softwareapplikationen, vollständige Kontrolle über die von ihm angebotenen Softwareapplikationen und die Installation dieser Softwareapplikationen hat, und trotzdem die zentralisierten Dienste der Ressourcenverwaltungszentrale beanspruchen kann.

In einer Ausführungsvariante wird in der Ressourcenverwaltungszentrale eine Applikationsinstallationsanforderung in die zweite Ressourcenverwaltungsinstruktion eingefügt, durch den Ressourcenkontrollmechanismus im bestimmten Ressourcenmodul wird entsprechend der Applikationsinstallationsanforderung eine Applikation installiert, und in der Ressourcenverwaltungszentrale werden Informationen über die installierte Applikation gespeichert, wobei die Informationen der Modulidentifizierung zugeordnet gespeichert werden. Der Vorteil dieser Ausführungsvariante besteht darin, dass sich die Ausführung der Applikationsverwaltungseinheit vereinfacht, da auch die Auslieferung der angeforderten Softwareapplikation an das Ressourcenmodul durch die Ressourcenverwaltungszentrale übernommen wird.

In einer Ausführungsvariante wird die Kommunikationsadresse des Kommunikationsendgeräts aus einem Datenspeicher bestimmt, in welchem Modulidentifizierungen und diesen Modulidentifizierungen zugeordnete Kommunikationsadressen gespeichert sind. Der Vorteil der Abbildung von Modulidentifizierungen auf Kommunikationsadressen, z.B. Rufnummern, besteht darin, dass der Ressourcenverwaltungszentrale und der Applikationsverwaltungseinheit bloss die Modulidentifizierung des Ressourcenmoduls angegeben werden muss und dass die aktuelle Kommunikationsadresse des Kommunikationsendgeräts, mit dem das Ressourcenmodul zur Zeit verbunden ist, vorzugsweise in einer Adressabbildungseinheit im Kommunikationsnetz bestimmt werden kann.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:

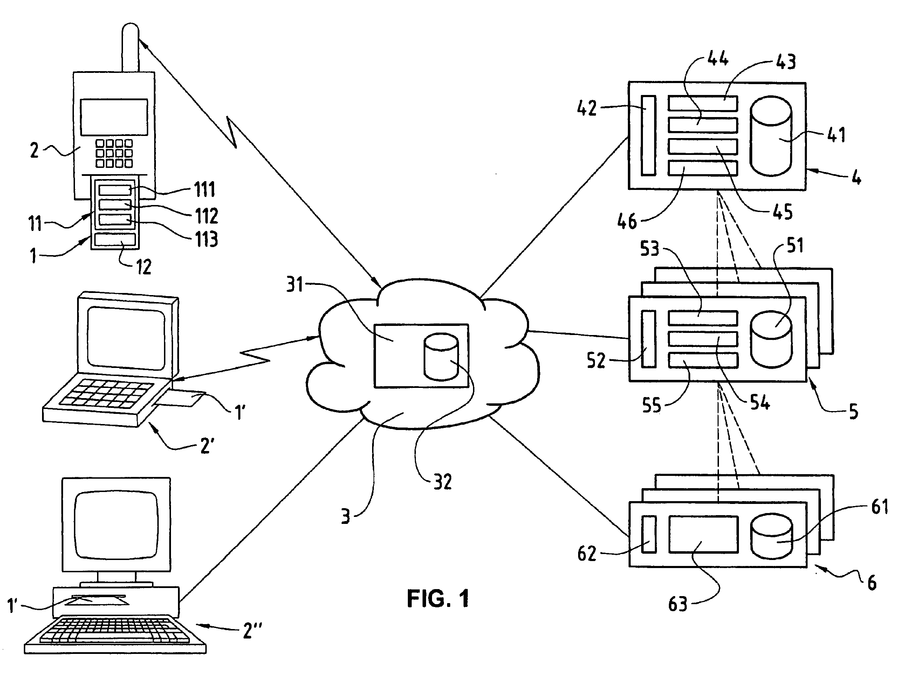

Figur 1 zeigt ein Blockdiagramm eines Systems zum Verwalten von Ressourcen von tragbaren Ressourcenmodulen, in welchem schematisch verschiedene Kommunikationsendgeräte mit Ressourcenmodulen dargestellt sind, die über ein Kommunikationsnetz mit einer Ressourcenverwaltungszentrale und einer Applikationsverwaltungseinheit verbunden sind.

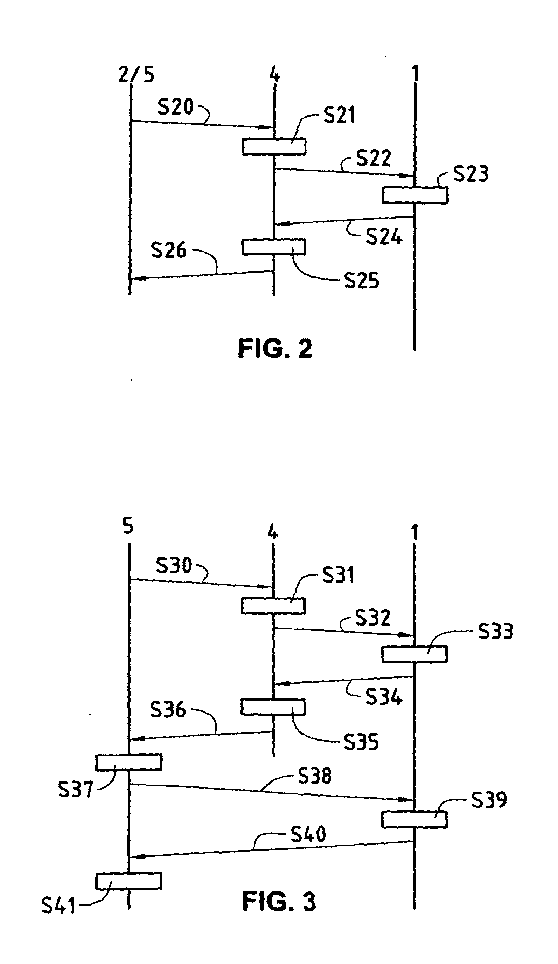

Figur 2 zeigt ein Zeitdiagramm, in welchem der Verfahrensablauf bei der Ressourcenverwaltung dargestellt ist, wobei der Datenaustausch zwischen einer Applikationsverwaltungseinheit, respektive einem Kommunikationsendgerät, der Ressourcenverwaltungszentrale und einem Ressourcenmodul für den Fall dargestellt ist, in welchem die Applikationsverwaltungseinheit nicht bei der Auslieferung angeforderter Softwareapplikationen beteiligt ist.
Figur 3 zeigt ein Zeitdiagramm, in welchem der Verfahrensablauf bei der Ressourcenverwaltung dargestellt ist, wobei der Datenaustausch zwischen einer Applikationsverwaltungseinheit, der Ressourcenverwaltungszentrale und einem Ressourcenmodul für den Fall dargestellt ist, in welchem die Applikationsverwaltungseinheit für die Auslieferung angeforderter Softwareapplikationen zuständig ist.

### Wege zur Ausführung der Erfindung

In den Figuren 1, 2 und 3 werden einander entsprechende, gleiche Komponenten durch gleiche Bezugszeichen bezeichnet. In der Figur 1 beziehen sich die Bezugszeichen 1 und 1' auf einander entsprechende tragbare Ressourcenmodule, wobei jedoch nur das mit dem Bezugszeichen 1 bezeichnete Ressourcenmodul detailliert dargestellt ist. Das Ressourcenmodul 1 umfasst einen elektronischen Speicher 11 mit mehreren Speichereinheiten zur Speicherung von Daten und Softwareprogrammen 111, 112, 113 sowie mindestens einen mit dem elektronischen Speicher 11 verbundenen Prozessor 12.

In der Figur 1 bezieht sich das Bezugszeichen 3 auf ein Kommunikationsnetz, welches ein Mobilfunknetz und/oder ein Festnetz umfasst. Das Mobilfunknetz ist beispielsweise ein GSM- (Global System for Mobile Communication) oder ein UMTS-Netz (Universal Mobile Telephone System) oder ein anderes, beispielsweise satellitenbasiertes Mobilfunknetz. Das Festnetz ist beispielsweise das öffentliche geschaltete Telefonnetz oder ein ISDN-Netz (Integrated Services Digital Network).

In der Figur 1 bezeichnen die Bezugszeichen 2, 2', 2" verschiedene mit dem Kommunikationsnetz 3 verbindbare Kommunikationsendgeräte, mit denen die Ressourcenmodule 1,1' entfernbar verbunden sind. Das Kommunikationsendgerät 2 ist ein Mobilfunktelefon. Das Kommunikationsendgerät 2' ist ein Laptop- oder ein PDA-Computer (Personal Digital Assistant) mit einem Kommunikationsmodul für die Kommunikation über ein Mobilfunknetz. Das Kommunikationsendgerät 2", beispielsweise ein PC (Personal Computer), umfasst ein Kommunikationsmodul für die Kommunikation über ein Festnetz.

Das Ressourcenmodul 1 umfasst einen Ressourcenkontrollmechanismus 111 zum Bereitstellen und Freigeben von Ressourcen des Ressourcenmoduls 1. Der Ressourcenkontrollmechanismus 111 ist vorzugsweise als programmiertes Softwaremodul ausgeführt und nimmt Ressourcenverwaltungsinstruktionen über das Kommunikationsendgerät 2 entgegen, mit dem es verbunden ist. Ressourcenverwaltungsinstruktionen umfassen Instruktionen zum Bereitstellen und Freigeben von Hard- und Softwareressourcen wie Speicherplatz bereitstellen, Speicherplatz freigeben, Applikation installieren oder Applikation entfernen. Der Ressourcenkontrollmechanismus 111 umfasst insbesondere auch programmierte Softwarefunktionen zum Installieren einer Applikation im Ressourcenmodul 1 entsprechend einer Applikationsinstallationsanforderung, die mit einer Ressourcenverwaltungsinstruktion empfangen wurde. Der Ressourcenkontrollmechanismus 111 führt eine Speicherbereichstabelle, in welcher bereitgestellte Speicherbereiche des elektronischen Speichers 11 reserviert oder installierten Softwareapplikationen zugeordnet sind. Der Ressourcenkontrollmechanismus 111 verhindert, dass Softwareapplikationen unberechtigterweise auf Daten anderer Softwareapplikationen zugreifen.

Das Ressourcenmodul 1 umfasst ein Bestätigungsmodul 112 zum Übermitteln einer Ressourcenverwaltungsbestätigung betreffend Ressourcen, die durch den Ressourcenkontrollmechanismus 111 entsprechend einer empfangenen Ressourcenverwaltungsinstruktion bereitgestellt oder freigegeben wurden, über das Kommunikationsnetz 3 an die Einheit, von der die Ressourcenverwaltungsinstruktion empfangen wurde. Das Bestätigungsmodul 112 ist vorzugsweise als programmiertes Softwaremodul ausgeführt und führt die Datenkommunikation über das Kommunikationsnetz 3 unter Zuhilfenahme der Kommunikationsfunktionen des verbundenen Kommunikationsendgeräts 2 aus.

Das Ressourcenmodul 1 umfasst zudem Software-Ressourcen 113 (Applikation), die bereits bei der Herstellung des Ressourcenmoduls 1 gespeichert wurden oder die zu einem späteren Zeitpunkt im elektronischen Speicher 11 des Ressourcenmoduls 1 gespeichert werden.

In der Figur 1 bezieht sich das Bezugszeichen 4 auf eine Ressourcenverwaltungszentrale, die einen oder mehrere mit dem Kommunikationsnetz 3 verbundene Computer umfasst. Für die Verbindung und den Datenaustausch mit und über das Kommunikationsnetz 3 umfasst die Ressourcenverwaltungszentrale 4 ein Kommunikationsmodul 42 mit den dafür erforderlichen Hard- und Softwarekomponenten.

Die Ressourcenverwaltungszentrale 4 umfasst ein Empfangsmodul 43 zum Entgegennehmen von Ressourcenverwaltungsinstruktionen. Die Ressourcenverwaltungsinstruktionen enthalten eine Modulidentifizierung, die ein bestimmtes oder eine Gruppe von Ressourcenmodulen 1, 1' bestimmt, auf die sich die betreffende Ressourcenverwaltungsinstruktion bezieht, und Angaben über die Ressourcen, die bereitgestellt oder freigegeben werden sollen, beispielsweise ein Speicherbereich, eine Applikationsidentifizierung und/oder eine Softwareapplikation. Je nach Ausführungsvariante können die Ressourcenverwaltungsinstruktionen von einem Benutzer oder von einer Applikationsverwaltungseinheit 5 über das Kommunikationsnetz 3 entgegengenommen werden. Wie in der Figur mittels der gestrichelten Linien angedeutet wird, kann zwischen der Ressourcenverwaltungszentrale 4 und der Applikationsverwaltungseinheit 5 auch eine direkte Verbindung bestehen (die Ressourcenverwaltungszentrale 4 und eine Applikationsverwaltungseinheit 5 können beispielsweise auf einem gemeinsamen Computer ausgeführt werden). Das Empfangsmodul 43 ist vorzugsweise als programmiertes Softwaremodul ausgeführt.

Die Ressourcenverwaltungszentrale 4 umfasst ein Verwaltungsinstruktionsmodul 44 zum Übermitteln einer Ressourcenverwaltungsinstruktion über das Kommunikationsnetz 3 an ein bestimmtes oder eine bestimmte Gruppe von Ressourcenmodulen 1,1'. Die Ressourcenverwaltungsinstruktion wird durch das Verwaltungsinstruktionsmodul 44 auf Grund der im Empfangsmodul 43 entgegengenommen Ressourcenverwaltungsinstruktion erstellt und an das (die) durch die Modulidentifizierung bestimmte(n) Ressourcenmodul(e) 1, 1' übermittelt. Die erstellte Ressourcenverwaltungsinstruktion enthält Angaben über die Ressourcen, die bereitgestellt oder freigegeben werden sollen, beispielsweise ein Speicherbereich. Je nach Ausführungsvariante kann das Verwaltungsinstruktionsmodul 44 auch eine Applikationsinstallationsanforderung in die Ressourcenverwaltungsinstruktion einfügen, die eine Applikationsidentifizierung und/oder eine Softwareapplikation umfasst. Bevor eine Ressourcenverwaltungsinstruktion durch das Verwaltungsinstruktionsmodul 44 an ein Ressourcenmodul übermittelt wird, überprüft das Verwaltungsinstruktionsmodul 44 im nachfolgend beschriebenen Datenspeicher 41, ob das betreffende Ressourcenmodul 1 über genügend freie Ressourcen verfügt. Das Verwaltungsinstruktionsmodul 44 ist vorzugsweise als programmiertes Softwaremodul ausgeführt.

Die Ressourcenverwaltungszentrale 4 umfasst zudem ein Verwaltungsmodul 45 und einen Datenspeicher 41 zum Speichern von Informationen über die bereitgestellten oder freigegebenen Ressourcen, wobei die Informationen jeweils der Modulidentifizierung des betreffenden Ressourcenmoduls 1 zugeordnet gespeichert werden. Der Datenspeicher 41, der beispielsweise als Datenbank auf einem separaten oder gemeinsamen Computer ausgeführt ist, enthält auch jeweils einer Modulidentifizierung zugeordnete Angaben über standardmässig installierte und vorhandene Software- und Hardware-Ressourcen des Ressourcenmoduls 1 oder einen Modultyp, aus dem sich diese Angaben mittels Modulprofilen herleiten lassen. Angaben über Hardware-Ressourcen umfassen Informationen über Speichergrösse, vorhandene Schnittstellen und Prozessoren. Angaben über Software-Ressourcen umfassen Informationen über vorhandene kryptographische Schlüssel, Kryptographie-Funktionen und andere Softwareprogramme. Falls die ursprüngliche Ressourcenverwaltungsinstruktion von einer Applikationsverwaltungseinheit 5 empfangen wurde, wird den obenstehend angeführten Informationen im Datenspeicher 41 auch eine Ressourcenbenutzeridentifizierung zugeordnet gespeichert, welche die Applikationsverwaltungseinheit 5 identifiziert. Das Verwaltungsmodul 45 ist vorzugsweise als programmiertes Softwaremodul ausgeführt.

Die Ressourcenverwaltungszentrale 4 umfasst schliesslich auch ein Bestätigungsmodul 46 zum Übermitteln einer Ressourcenbereitstellungsbestätigung an die Applikationsverwaltungseinheit 5, von der gegebenenfalls die Ressourcenverwaltungsinstruktion übermittelt wurde. Das Bestätigungsmodul 46 ist vorzugsweise als programmiertes Softwaremodul ausgeführt.

Die Applikationsverwaltungseinheit 5 umfasst ein Kommunikationsmodul 52 mit den erforderlichen Hard- und Softwarekomponenten für den Datenaustausch über das Kommunikationsnetz 3. Applikationsanforderungen von einem interessierten Benutzer des Kommunikationsendgeräts 2 werden über das Kommunikationsmodul 52 empfangen und durch entsprechende programmierte Softwarefunktionen in der Applikationsverwaltungseinheit 5 entgegengenommen. Neben der Applikationsanforderung, die eine Applikationsidentifizierung umfasst, wird vom Benutzer auch die Modulidentifizierung des Ressourcenmoduls 1 entgegengenommen, in dem die Software-Applikation installiert werden soll.

Wie in der Figur 1 schematisch dargestellt ist, können Applikationsanforderungen vom Benutzer auch über eine von mehreren Applikationsanbietereinheiten 6 an die Applikationsverwaltungseinheit 5 übermittelt werden. Die Applikationsanbietereinheiten 6 umfassen jeweils mindestens einen Computer, ein Kommunikationsmodul 62 mit den erforderlichen Hard- und Softwarekomponenten für den Datenaustausch über das Kommunikationsnetz 3, einen Datenspeicher 61, in welchem Modulidentifizierungen und diesen Modulidentifizierungen zugeordnete Applikationsidentifizierungen gespeichert sind, und ein Softwaremodul 63 zum Entgegennehmen von Applikationsanforderungen, zum Weiterleiten von Applikationsanforderungen an eine zuständige Applikationsverwaltungseinheit 5 und zum Speichern der angeführten Informationen im Datenspeicher 61. Die hierarchische Organisation von Applikationsverwaltungseinheiten 5 und Applikationsanbietereinheiten 6 ermöglicht die flexible Aufteilung von Ressourcenverantwortlichkeiten und -vertreibung unter verschiedenen Betreibern dieser Einheiten. Der Datenaustausch zwischen den Applikationsverwaltungseinheiten 5 und den Applikationsanbietereinheiten 6 erfolgt über das Kommunikationsnetz 3 oder, wie in der Figur 1 durch die gestrichelten Linien angedeutet ist, über eine direkte Verbindung (eine Applikationsverwaltungseinheit 5 und eine Applikationsanbietereinheit 6 können beispielsweise auf einem gemeinsamen Computer ausgeführt werden).

Die Applikationsverwaltungseinheit 5 umfasst programmierte Softwarefunktionen, um auf Grund einer entgegengenommenen Applikationsanforderung eine Ressourcenverwaltungsinstruktion an die Ressourcenverwaltungszentrale 4 zu übermitteln. Dabei werden die betreffende Modulidentifizierung und eine Ressourcenbenutzeridentifizierung, die die Applikationsverwaltungseinheit 5 identifiziert, in die Ressourcenverwaltungsinstruktion eingefügt. Für den Fall, dass die Applikationsinstallationsanforderung durch die Ressourcenverwaltungszentrale 4 über das Kommunikationsnetz 3 an das betreffende Ressourcenmodul 1 übermittelt wird, wird zudem eine Applikationsidentifizierung in die Ressourcenverwaltungsinstruktion eingefügt.

Für den Fall, dass die Applikationsinstallationsanforderung direkt durch die Applikationsverwaltungseinheit 5 über das Kommunikationsnetz 3 an das betreffende Ressourcenmodul 1 übermittelt wird, umfasst die Applikationsverwaltungseinheit 5 dazu ein Applikationsinstruktionsmodul 54 sowie ein Applikationsverwaltungsmodul 55 zum Speichern von Informationen über die installierte Applikation, wobei diese Informationen der Modulidentifizierung des betreffenden Ressourcenmoduls 1 zugeordnet gespeichert werden.

In der Figur 1 bezieht sich das Bezugszeichen 31 auf eine Adressabbildungseinheit, vorzugsweise eine programmierte Softwarefunktion, welche auf Grund einer Modulidentifizierung die Kommunikationsadresse bestimmt, die dem Kommunikationsendgerät 2 zugeordnet ist, mit welchem das das durch die Modulidentifizierung bestimmte Ressourcenmodul 1 verbunden ist. Die Adressabbildungseinheit 31 hat Zugang zu einem Adressregister, in welchem Modulidentifizierungen Kommunikationsadressen zugeordnet sind. Das Adressregister ist beispielsweise ein HLR (Home Location Register), in welchem so genannte IMSIs (International Mobile Subscriber Identification) so genannten MSISDN-Nummern (Mobile Subscriber ISDN), das heisst Rufnummern, zugeordnet sind. Neben den IMSIs können auch andere Datenelemente als Modulidentifizierungen verwendet werden, beispielsweise Kartennummern oder Chipnummern.

Der Fachmann versteht, dass die angeführten Softwaremodule auch vollständig oder zum Teil hardwaremässig ausgeführt werden können.

In den folgenden Abschnitten wird mit Bezug auf die Figur 2 der Verfahrensablauf bei der Ressourcenverwaltung für den Fall beschrieben, in welchem eine Softwareapplikation angefordert und durch die Ressourcenverwaltungseinheit 4 an das Ressourcenmodul 1 ausgeliefert wird.

Im Schritt S20 wird vom Benutzer mittels seines Kommunikationsendgeräts 2 oder von der Applikationsverwaltungseinheit 5 eine Ressourcenverwaltungsinstruktion an die Ressourcenverwaltungseinheit 4 übermittelt. Die Ressourcenverwaltungsinstruktion wird von der Applikationsverwaltungseinheit 5 auf Grund einer vom Benutzer empfangenen Applikationsanforderung (nicht dargestellt) übermittelt. Die Ressourcenverwaltungsinstruktion enthält die Applikationsidentifizierung der gewünschten Softwareapplikation, die Modulidentifizierung des Ressourcenmoduls 1, in das die Softwareapplikation geladen werden soll, und gegebenenfalls die Ressourcenbenutzeridentifizierung, die der Applikationsverwaltungseinheit 5 zugeordnet ist.

Im Schritt S21 wird die empfangene Ressourcenverwaltungsinstruktion in der Ressourcenverwaltungseinheit 4 behandelt. Auf Grund der empfangenen Modulidentifizierung und der Applikationsidentifizierung werden durch Konsultation des Datenspeichers 41 die Ressourcenerfordernisse der gewünschten Softwareapplikation bestimmt (z.B. Speicherbedarf und verwendete Softwarefunktionen) und mit den im Ressourcenmodul 1 verfügbaren Ressourcen verglichen. Falls keine ausreichenden Ressourcen verfügbar sind, wird eine negative Mitteilung an die Applikationsverwaltungseinheit 5 respektive an das Kommunikationsendgerät 2 übermittelt. Ansonsten wird eine Ressourcenverwaltungsinstruktion vorbereitet, in die eine Applikationsinstallationsanforderung mit der gewünschten Softwareapplikation (und gegebenenfalls mit zusätzlichen benötigten Softwareressourcen) eingefügt wird. In die vorbereitete Ressourcenverwaltungsinstruktion können auch installationsspezifische Angaben wie Startadresse und Speichergrösse eingefügt werden. Zudem werden die Applikationsidentifizierung, die Modulidentifizierung und gegebenenfalls die Ressourcenbenutzeridentifizierung und die installationsspezifischen Angaben im Datenspeicher 41 einander zugeordnet gespeichert.

Im Schritt S22 wird die vorbereitete Ressourcenverwaltungsinstruktion von der Ressourcenverwaltungszentrale 4 über das Kommunikationsnetz 3 an das Ressourcenmodul 1 übermittelt. Dabei wird die der Modulidentifizierung zugeordnete Kommunikationsadresse, das heisst die Rufnummer des Kommunikationsendgeräts 2, durch die Adressabbildungseinheit 31 bestimmt.

Im Schritt S23 wird die Ressourcenverwaltungsinstruktion im Ressourcenmodul 1 über das Kommunikationsendgerät 2 entgegengenommen und behandelt. Der Ressourcenkontrollmechanismus 111 reserviert den notwendigen Speicherbedarf und installiert die Softwareapplikation. Wenn die installationsspezifischen Angaben nicht bereits durch die Ressourcenverwaltungszentrale 4 vorgegeben wurden, werden sie durch den Ressourcenkontrollmechanismus 111 bestimmt. Danach wird im Ressourcenmodul 1 eine Ressourcenverwaltungsbestätigung vorbereitet, die gegebenenfalls installationsspezifische Angaben umfasst.

Im Schritt S24 wird die Ressourcenverwaltungsbestätigung vom Ressourcenmodul 1 über das Kommunikationsendgerät 2 und das Kommunikationsnetz 3 an die Ressourcenverwaltungszentrale 4 übermittelt.

Im Schritt S25 markiert die Ressourcenverwaltungszentrale 4 im Datenspeicher 41 die Softwareapplikation auf Grund der empfangenen Ressourcenverwaltungsbestätigung für das Ressourcenmodul 1 als installiert und die benötigten Ressourcen als belegt.

Im Schritt S26 übermittelt die Ressourcenverwaltungszentrale 4 eine Bestätigung an die Applikationsverwaltungseinheit 5 respektive an das Kommunikationsendgerät 2.

Falls im Schritt S20 eine Ressourcenverwaltungsinstruktion an die Ressourcenverwaltungseinheit 4 übermittelt wird, die sich auf die Freigabe von Ressourcen im Ressourcenmodul 1 bezieht, wird im Schritt S21 eine entsprechende Ressourcenverwaltungsinstruktion vorbereitet, in die eine Ressourcenfreigabeanforderung eingefügt wird, und im Schritt S22 an das Ressourcenmodul 1 übermittelt. Im Schritt S23 gibt der Ressourcenkontrollmechanismus 111 die Ressourcen entsprechend der empfangenen Ressourcenfreigabeanforderung frei. Im Schritt S25 markiert die Ressourcenverwaltungszentrale 4 im Datenspeicher 41 die betreffenden Ressourcen auf Grund einer empfangenen Ressourcenverwaltungsbestätigung für das Ressourcenmodul 1 als freigegeben.

In den folgenden Abschnitten wird mit Bezug auf die Figur 3 der Verfahrensablauf bei der Ressourcenverwaltung für den Fall beschrieben, in welchem die angeforderte Softwareapplikation durch die Applikationsverwaltungseinheit an das Ressourcenmodul ausgeliefert wird.

Im Schritt S30 wird von der Applikationsverwaltungseinheit 5 eine Ressourcenverwaltungsinstruktion an die Ressourcenverwaltungseinheit 4 übermittelt. Die Ressourcenverwaltungsinstruktion wird von der Applikationsverwaltungseinheit 5 auf Grund einer vom Benutzer empfangenen Applikationsanforderung (nicht dargestellt) übermittelt. Die Ressourcenverwaltungsinstruktion enthält Angaben über die bereitzustellenden benötigten Ressourcen für die gewünschte Softwareapplikation, beispielsweise den benötigten Speicherbedarf, die Modulidentifizierung des Ressourcenmoduls 1, in dem die Ressourcen bereit gestellt werden sollen, und die Ressourcenbenutzeridentifizierung, die der Applikationsverwaltungseinheit 5 zugeordnet ist.

Im Schritt S31 wird die empfangene Ressourcenverwaltungsinstruktion in der Ressourcenverwaltungseinheit 4 behandelt. Auf Grund der empfangenen Modulidentifizierung werden die Angaben über die bereitzustellenden Ressourcen im Datenspeicher 41 mit den im Ressourcenmodul 1 verfügbaren Ressourcen verglichen. Falls keine ausreichenden Ressourcen verfügbar sind, wird eine negative Mitteilung an die Applikationsverwaltungseinheit 5 übermittelt. Ansonsten wird eine Ressourcenverwaltungsinstruktion vorbereitet, in die die Angaben über die bereitzustellenden Ressourcen eingefügt werden. In die vorbereitete Ressourcenverwaltungsinstruktion können zudem weitere ressourcenspezifische Angaben wie Startadressen oder definierte Speicherbereiche eingefügt werden. Zudem werden die Modulidentifizierung, die Ressourcenbenutzeridentifizierung und die Angaben über die bereitzustellenden Ressourcen im Datenspeicher 41 einander zugeordnet gespeichert.

Im Schritt S32 wird die vorbereitete Ressourcenverwaltungsinstruktion von der Ressourcenverwaltungszentrale 4 über das Kommunikationsnetz 3 an das Ressourcenmodul 1 übermittelt. Dabei wird die der Modulidentifizierung zugeordnete Kommunikationsadresse, das heisst die Rufnummer des Kommunikationsendgeräts 2, durch die Adressabbildungseinheit 31 bestimmt.

Im Schritt S33 wird die Ressourcenverwaltungsinstruktion im Ressourcenmodul 1 über das Kommunikationsendgerät 2 entgegengenommen und behandelt. Der Ressourcenkontrollmechanismus 111 reserviert die angeforderten Ressourcen, beispielsweise den angeforderten Speicherplatz. Wenn die ressourcenspezifischen Angaben nicht bereits durch die Ressourcenverwaltungszentrale 4 vorgegeben wurden, werden sie durch den Ressourcenkontrollmechanismus 111 bestimmt. Danach wird im Ressourcenmodul 1 eine Ressourcenverwaltungsbestätigung vorbereitet, die gegebenenfalls ressourcenspezifische Angaben und eine Ressourcenreferenz umfasst.

Im Schritt S34 wird die Ressourcenverwaltungsbestätigung vom Ressourcenmodul 1 über das Kommunikationsendgerät 2 und das Kommunikationsnetz 3 an die Ressourcenverwaltungszentrale 4 übermittelt.

Im Schritt S35 markiert die Ressourcenverwaltungszentrale 4 im Datenspeicher 41 die angeforderten Ressourcen auf Grund der empfangenen Ressourcenverwaltungsbestätigung für das Ressourcenmodul 1 als reserviert und ordnet ihnen die empfangene Ressourcenreferenz zu.

Im Schritt S36 übermittelt die Ressourcenverwaltungszentrale 4 eine Ressourcenbereitstellungsbestätigung mit der Ressourcenreferenz an die Applikationsverwaltungseinheit 5.

Im Schritt S37 wird auf Grund der empfangenen Ressourcenbereitstellungsbestätigung in der Applikationsverwaltungseinheit 5 eine Applikationsinstallationsanforderung mit der gewünschten Softwareapplikation und der Ressourcenreferenz der bereitgestellten Ressourcen vorbereitet.

Im Schritt S38 wird die vorbereitete Applikationsinstallationsanforderung von der Applikationsverwaltungseinheit 5 über das Kommunikationsnetz 3 und das Kommunikationsendgerät 2 an das Ressourcenmodul 1 übermittelt. Dabei wird die der Modulidentifizierung zugeordnete Kommunikationsadresse, das heisst die Rufnummer des Kommunikationsendgeräts 2, durch die Adressabbildungseinheit 31 bestimmt.

Im Schritt S39 wird die Applikationsinstallationsanforderung im Ressourcenmodul 1 über das Kommunikationsendgerät 2 entgegengenommen und behandelt. Der Ressourcenkontrollmechanismus 111 installiert die Softwareapplikation unter Verwendung der durch die Ressourcenreferenz bestimmten reservierten Ressourcen. Danach wird im Ressourcenmodul 1 eine Bestätigung vorbereitet.

Im Schritt S40 wird die Bestätigung vom Ressourcenmodul 1 über das Kommunikationsendgerät 2 und das Kommunikationsnetz 3 an die Applikationsverwaltungseinheit 5 übermittelt.

Im Schritt S41 speichert die Applikationsverwaltungseinheit 5 auf Grund der empfangenen Bestätigung die Applikationsidentifizierung der installierten Softwareapplikation im Datenspeicher 51 zugeordnet zur Modulidentifizierung des Ressourcenmoduls 1 und markiert die Softwareapplikation als installiert.

Abschliessend soll festgehalten werden, dass der Austausch von Instruktionen und Daten zwischen der Ressourcenverwaltungszentrale 4 und einem Ressourcenmodul 1, zwischen der Applikationsverwaltungseinheit 5 und einem Ressourcenmodul 1, zwischen der Ressourcenverwaltungszentrale 4 und der Applikationsverwaltungseinheit 5 sowie zwischen der Applikationsverwaltungseinheit 5 und der Applikationsanbietereinheit 6 vorzugsweise unter Verwendung von kryptographischen Sicherheitsmechanismen erfolgt. Insbesondere können für die Identifizierung und Authentifizierung digitale Zertifikate unter Verwendung von Schlüsselpaaren der PKI (Public Key Infrastructure) verwendet werden.

### Gewerbliche Anwendbarkeit

Die vorliegende Erfindung ermöglicht, die Verwendung von Ressourcen von einer Vielzahl von Ressourcenmodulen, die mit Kommunikationsendgeräten verbunden sind, zentralisiert zu verwalten.

## Patentansprüche

1. Verfahren zum Verwalten von Ressourcen von tragbaren Ressourcenmodulen (1), die jeweils mit einem Kommunikationsendgerät (2) verbunden sind und die insbesondere als Chipkarte ausgestaltet sind, wobei die Ressourcen elektronische Speichereinheiten (11) umfassen, wobei das Verfahren umfasst
- Übermittlung einer ersten Ressourcenverwaltungsinstruktion, die eine Modulidentifizierung zur Bestimmung eines der Ressourcenmodule (1) und Angaben über bereitzustellende oder freizugebende Ressourcen umfasst, an eine Ressourcenverwaltungszentrale (4),
- Überprüfen in der Ressourcenverwaltungszentrale (4), ob das durch die Modulidentifizierung bestimmte Ressourcenmodul (1) über genügend freie Ressourcen verfügt, aufgrund gespeicherter Informationen über bereitgestellte oder freigegebene Ressourcen des durch die Modulidentifizierung bestimmten Ressourcenmoduls (1), und bei genügend freien Ressourcen
- Übermittlung einer zweiten Ressourcenverwaltungsinstruktion von der Ressourcenverwaltungszentrale (4) über ein Kommunikationsnetz (3) an das durch die Modulidentifizierung bestimmte Ressourcenmodul (1),
- Bereitstellung oder Freigabe von Ressourcen durch einen Ressourcenkontrollmechanismus (111) im bestimmten Ressourcenmodul (1) entsprechend der empfangenen zweiten Ressourcenverwaltungsinstruktion,
- Übermittlung einer Ressourcenverwaltungsbestätigung vom bestimmten Ressourcenmodul (1) über das Kommunikationsnetz (3) an die Ressourcenverwaltungszentrale (4), und
- Speicherung von Informationen über die bereitgestellten oder freigegebenen Ressourcen in der Ressourcenverwaltungszentrale (4), wobei die Informationen der Modulidentifizierung zugeordnet gespeichert werden.

2. Verfahren gemäss Anspruch 1, **dadurch gekennzeichnet, dass** vom Benutzer des Kommunikationsendgeräts (2) die Modulidentifizierung und eine Applikationsanforderung an eine Applikationsverwaltungseinheit (5) übermittelt werden, dass die erste Ressourcenverwaltungsinstruktion auf Grund der empfangenen Applikationsanforderung durch die Applikationsverwaltungseinheit (5) an die Ressourcenverwaltungszentrale (4) übermittelt wird, wobei die erste Ressourcenverwaltungsinstruktion eine Ressourcenbenutzeridentifizierung umfasst, und dass die Ressourcenbenutzeridentifizierung in der Ressourcenverwaltungszentrale (4) der Modulidentifizierung zugeordnet gespeichert wird.

3. Verfahren gemäss Anspruch 2, **dadurch gekennzeichnet, dass** von der Ressourcenverwaltungszentrale (4) eine Ressourcenbereitstellungsbestätigung an die Applikationsverwaltungseinheit (5) übermittelt wird, dass von der Applikationsverwaltungseinheit (5) eine Applikationsinstallationsanforderung über das Kommunikationsnetz (3) an das bestimmte Ressourcenmodul (1) übermittelt wird, dass durch den Ressourcenkontrollmechanismus (111) im bestimmten Ressourcenmodul (1) entsprechend der Applikationsinstallationsanforderung unter Verwendung der bereitgestellten Ressourcen eine Applikation installiert wird, und dass in der Applikationsverwaltungseinheit (5) Informationen über die installierte Applikation gespeichert werden, wobei die Informationen der Modulidentifizierung zugeordnet gespeichert werden.

4. Verfahren gemäss einem der Ansprüche 1 oder 2, **dadurch gekennzeichnet, dass** in der Ressourcenverwaltungszentrale (4) eine Applikationsinstallationsanforderung in die zweite Ressourcenverwaltungsinstruktion eingefügt wird, dass durch den Ressourcenkontrollmechanismus (111) im bestimmten Ressourcenmodul (1) entsprechend der Applikationsinstallationsanforderung eine Applikation installiert wird, und dass in der Ressourcenverwaltungszentrale (4) Informationen über die installierte Applikation gespeichert werden, wobei die Informationen der Modulidentifizierung zugeordnet gespeichert werden.

5. Verfahren gemäss einem der Ansprüche 1 bis 4, **dadurch gekennzeichnet, dass** die Kommunikationsadresse des Kommunikationsendgeräts (2) aus einem Datenspeicher (32) bestimmt wird, in welchem Modulidentifizierungen und diesen Modulidentifizierungen zugeordnete Kommunikationsadressen gespeichert sind.

6. Verfahren gemäss einem der Ansprüche 1 bis 5, **dadurch gekennzeichnet, dass** zudem Software-Ressourcen (113) der Ressourcenmodule (1) verwaltet werden.

7. System zur Verwaltung von Ressourcen von tragbaren Ressourcenmodulen (1, 1'), die jeweils mit einem Kommunikationsendgerät (2, 2', 2") verbunden sind, die jeweils einen Ressourcenkontrollmechanismus (111) zur Bereitstellung und Freigabe von Ressourcen im betreffenden Ressourcenmodul (1, 1') umfassen, wobei die Ressourcen elektronische Speichereinheiten (11) umfassen, und die insbesondere als Chipkarten ausgestaltet sind, **dadurch gekennzeichnet,**
**dass** das System eine Ressourcenverwaltungszentrale (4) umfasst mit einem Empfangsmodul (43) zum Entgegennehmen einer an die Ressourcenverwaltungszentrale (4) übermittelten ersten Ressourcenverwaltungsinstruktion, die eine Modulidentifizierung zur Bestimmung eines der Ressourcenmodule (1) und Angaben über bereitzustellende oder freizugebende Ressourcen umfasst,
**dass** die Ressourcenverwaltungszentrale (4) ein Verwaltungsinstruktionsmodul (44) umfasst zum Überprüfen, ob das durch die Modulidentifizierung bestimmte Ressourcenmodul (1) über genügend freie Ressourcen verfügt, aufgrund gespeicherter Informationen über bereitgestellte oder freigegebene Ressourcen des durch die Modulidentifizierung bestimmten Ressourcenmoduls (1), und bei genügend freien Ressourcen zur Übermittlung einer zweiten Ressourcenverwaltungsinstruktion über ein mit der Ressourcenverwaltungszentrale (4) verbundenes Kommunikationsnetz (3) an das durch die Modulidentifizierung bestimmte Ressourcenmodul (1),
**dass** die Ressourcenverwaltungszentrale (4) Mittel umfasst zum Entgegennehmen einer Ressourcenverwaltungsbestätigung über das Kommunikationsnetz (3) vom bestimmten Ressourcenmodul (1) betreffend Ressourcen, die durch den Ressourcenkontrollmechanismus (111) entsprechend einer empfangenen zweiten Ressourcenverwaltungsinstruktion bereitgestellt oder freigegeben wurden, und
**dass** die Ressourcenverwaltungszentrale (4) ein Verwaltungsmodul (45) und einen Datenspeicher (41) umfasst zum Speichern von Informationen über die bereitgestellten oder freigegebenen Ressourcen, wobei die Informationen der Modulidentifizierung zugeordnet gespeichert werden.

8. System gemäss Anspruch 7, **dadurch gekennzeichnet, dass** das System eine Applikationsverwaltungseinheit (5) umfasst zum Entgegennehmen der Modulidentifizierung und einer Applikationsanforderung vom Benutzer des Kommunikationsendgeräts (2) und zum Übermitteln der ersten Ressourcenverwaltungsinstruktion an die Ressourcenverwaltungszentrale (4) auf Grund der entgegengenommenen Applikationsanforderung, wobei die erste Ressourcenverwaltungsinstruktion eine Ressourcenbenutzeridentifizierung umfasst, und dass das Verwaltungsmodul (45) Mittel umfasst zum Speichern der Ressourcenbenutzeridentifizierung im Datenspeicher (41) zugeordnet zur Modulidentifizierung.

9. System gemäss Anspruch 8, **dadurch gekennzeichnet, dass** die Ressourcenverwaltungszentrale (4) ein Bestätigungsmodul (46) umfasst zum Übermitteln einer Ressourcenbereitstellungsbestätigung an die Applikationsverwaltungseinheit (5), dass die Applikationsverwaltungseinheit (5) ein Applikationsinstruktionsmodul (54) umfasst zum Übermitteln einer Applikationsinstallationsanforderung über das Kommunikationsnetz (3) an das bestimmte Ressourcenmodul (1), dass der Ressourcenkontrollmechanismus (111) Mittel umfasst, zum Installieren einer Applikation im betreffenden Ressourcenmodul (1) entsprechend der Applikationsinstallationsanforderung und unter Verwendung von bereitgestellten Ressourcen, und dass die Applikationsverwaltungseinheit (5) ein Applikationsverwaltungsmodul (55) umfasst zum Speichern von Informationen über die installierte Applikation, wobei die Informationen der Modulidentifizierung zugeordnet gespeichert werden.

10. System gemäss einem der Ansprüche 7 oder 8, **dadurch gekennzeichnet, dass** das Verwaltungsinstruktionsmodul (44) Mittel umfasst, zum Einfügen einer Applikationsinstallationsanforderung in die zweite Ressourcenverwaltungsinstruktion, dass der Ressourcenkontrollmechanismus (111) Mittel umfasst, zum Installieren einer Applikation im betreffenden Ressourcenmodul (1) entsprechend der Applikationsinstallationsanforderung, und dass das Verwaltungsmodul (45) Mittel umfasst zum Speichern von Informationen über die installierte Applikation, wobei die Informationen im Datenspeicher (41) der Modulidentifizierung zugeordnet gespeichert werden.

11. System gemäss einem der Ansprüche 7 bis 10, **dadurch gekennzeichnet, dass** es eine Adressabbildungseinheit (31) und einen Datenspeicher (32) zur Bestimmung der Kommunikationsadresse des Kommunikationsendgeräts (2) umfasst, in welchem Datenspeicher (32) Modulidentifizierungen und diesen Modulidentifizierungen zugeordnete Kommunikationsadressen gespeichert sind.

12. System gemäss einem der Ansprüche 7 bis 11, **dadurch gekennzeichnet, dass** die Ressourcen, die durch den Ressourcenkontrollmechanismus (111) bereitgestellt und freigegeben werden, zudem Software-Ressourcen (113) umfassen.

13. System gemäss Anspruch 7, **dadurch gekennzeichnet, dass** das Verwaltungsinstruktionsmodul (44) Mittel umfasst zum Einfügen einer Applikationsinstallationsanforderung in die zweite Ressourcenverwaltungsinstruktion, und dass das Verwaltungsmodul (45) Mittel umfasst zum Speichern von Informationen über eine im bestimmten Ressourcenmodul (1) entsprechend der Applikationsinstallationsanforderung installierte Applikation, wobei die Informationen im Datenspeicher (41) der Modulidentifizierung zugeordnet gespeichert werden.

14. System gemäss Anspruch 7, **dadurch gekennzeichnet, dass** die Ressourcenverwaltungszentrale (4) ein Bestätigungsmodul (46) umfasst zum Übermitteln einer Ressourcenbereitstellungsbestätigung an eine Applikationsverwaltungseinheit (5), von welcher die erste Ressourcenverwaltungsinstruktion durch das Empfangsmodul (43) entgegengenommen wurde, dass das Verwaltungsmodul (45) Mittel umfasst zum Speichern einer in der ersten Ressourcenverwaltungsinstruktion enthaltenen Ressourcenbenutzeridentifizierung, wobei die Ressourcenbenutzeridentifizierung im Datenspeicher (41) zugeordnet zur Modulidentifizierung gespeichert wird.

## Claims

1. Method for managing resources of portable resource modules (1) which are in each case connected to a communication terminal (2) and which, in particular, are constructed as chip cards, wherein the resources comprise electronic memory units (11), wherein the method comprises:
- transmission of a first resource management instruction which comprises a module identification for determining one of the resource modules (1) and information about resources to be provided or to be released, to a resource management centre (4),
- checking in the resource management centre (4) if the resource module (1) determined by the module identification has sufficient free resources, on the basis of stored information about resources provided or released, of the resource module (1) determined by the module identification, and in the case of sufficient free resources,
- transmitting a second resource management instruction from the resource management centre (4) via a communication network (3) to the resource module (1) determined by the module identification,
- providing or releasing resources by a resource control mechanism (111) in the resource module (1) determined, in accordance with the received second resource management instruction,
- transmitting a resource management confirmation from the resource module (1) determined via the communication network (3) to the resource management centre (4), and
- storing information about the resources provided or released in the resource management centre (4), wherein the information is stored allocated to the module identification.

2. Method according to Claim 1, **characterized in that** the user of the communication terminal (2) transmits the module identification and an application request to an application management unit (5), that the first resource management instruction is transmitted to the resource management centre (4) on the basis of the received application request by the application management unit (5), wherein the first resource management instruction comprises a resource user identification, and **in that** the resource user identification is stored allocated to the module identification in the resource management centre (4).

3. Method according to Claim 2, **characterized in that** a resource provision confirmation is transmitted to the application management unit (5) by the resource management centre (4), **in that** an application installation request is transmitted to the determined resource module (1) via the communication network (3) by the application management unit (5), **in that** an application is installed by the resource control mechanism (111) in the determined resource module (1) in accordance with the application installation request, using the resources provided, and **in that** information about the application installed is stored in the application management unit (5), wherein the information is stored allocated to the module identification.

4. Method according to one of Claims 1 or 2, **characterized in that** an application installation request is inserted in the second resource management instruction in the resource management centre (4), **in that** an application is installed by the resource control mechanism (111) in the determined resource module (1) in accordance with the application installation request, and **in that** information about the application installed is stored in the resource management centre (4), wherein the information is stored allocated to the module identification.

5. Method according to one of Claims 1 to 4, **characterized in that** the communication address of the communication terminal (2) is determined from a data memory (32) in which module identifications and communication addresses allocated to these module identifications are stored.

6. Method according to one of Claims 1 to 5, **characterized in that** additionally software resources (113) of the resource modules (1) are managed.

7. System for managing resources of portable resource modules (1, 1') which are in each case connected to a communication terminal (2, 2', 2") which in each case comprise a resource control mechanism (111) for providing and releasing resources in the relevant resource module (1, 1'), wherein the resources comprise electronic memory units (11) and which, in particular, are constructed as chip cards, **characterized in that**
the system comprises a resource management centre (4) having a receiving module (43) for receiving a first resource management instruction transmitted to the resource management centre (4), which comprises a module identification for determining one of the resource modules (1) and information about resources to be provided or to be released,
**in that** the resource management centre (4) comprises a management instruction module (44) for checking if the resource module (1) determined by the module identification has sufficient free resources, on the basis of stored information about resources provided or released of the resource module (1) determined by the module identification, and in the case of sufficient free resources for transmitting a second resource management instruction via a communication network (3) connected to the resource management centre (4) to the resource module (1) determined by the module identification,
**in that** the resource management centre (4) comprises means for receiving a resource management confirmation via the communication network (3) from the determined resource module (1) with reference to resources which have been provided or released by the resource control mechanism (111) in accordance with a second resource management instruction received, and
**in that** the resource management centre (4) comprises a management module (45) and a data memory (41) for storing information about the resources provided or released, wherein the information is stored allocated to the module identification.

8. System according to Claim 7, **characterized in that** the system comprises an application management unit (5) for receiving the module identification and an application request by the user of the communication terminal (2) and for transmitting the first resource management instruction to the resource management centre (4) on the basis of the application request received, wherein the first resource management instruction comprises a resource user identification, and **in that** the management module (45) comprises means for storing the resource user identification in the data memory (41) allocated to the module identification.

9. System according to Claim 8, **characterized in that** the resource management centre (4) comprises a confirmation module (46) for transmitting a resource provision confirmation to the application management unit (5), **in that** the application management unit (5) comprises an application instruction module (54) for transmitting an application installation request via the communication network (3) to the determined resource module (1), **in that** the resource control mechanism (111) comprises means for installing an application in the resource module (1) concerned in accordance with the application installation request and by using resources provided, and **in that** the application management unit (5) comprises an application management module (55) for storing information about the application installed, wherein the information is stored allocated to the module identification.

10. System according to one of Claims 7 or 8, **characterized in that** the management instruction module (44) comprises means for inserting an application installation request into the second resource management instruction, **in that** the resource control mechanism (111) comprises means for installing an application in the resource module (1) concerned, in accordance with the application installation request and **in that** the management module (45) comprises means for storing information about the application installed, wherein the information is stored allocated to the module identification in the data memory (41).

11. System according to one of Claims 7 to 10, **characterized in that** it comprises an address mapping unit (31) and a data memory (32) for determining the communication address of the communication terminal (2), in which data memory (32) module identifications and communication addresses allocated to these module identifications are stored.

12. System according to one of Claims 7 to 11, **characterized in that** the resources which are provided and released by the resource control mechanism (111) also comprise software resources (113).

13. System according to Claim 7, **characterized in that** the management instruction module (44) comprises means for inserting an application installation request into the second resource management instruction, and **in that** the management module (45) comprises means for storing information about an application installed in the determined resource module (1) in accordance with the application installation request, wherein the information is stored allocated to the module identification in the data memory (41).

14. System according to Claim 7, **characterized in that** the resource management centre (4) comprises a confirmation module (46) for transmitting a resource provision confirmation to an application management unit (5) from which the first resource management instruction was received by the receiving module (43), **in that** the management module (45) comprises means for storing a resource user identification contained in the first resource management instruction, wherein the resource user identification is stored allocated to the module identification in the data memory (41).

## Revendications

1. Procédé de gestion de ressources par des modules de ressources portables (1), qui sont chacun reliés à un terminal de communication (2) et qui sont notamment réalisés sous forme de cartes à puce, dans lequel les ressources comprennent des unités de stockage électroniques (11), le procédé comprenant :
- la transmission d'une première instruction de gestion de ressources qui comprend une identification de module destinée à déterminer l'un des modules de ressources (1) et des données concernant des ressources devant être fournies ou libérées à une centrale de gestion des ressources (4),
- le fait de vérifier, dans la centrale de gestion de ressources (4) si le module de ressources (1) déterminé par l'identification de module possède suffisamment de ressources libres, sur la base d'informations stockées concernant les ressources fournies ou libérées du module de ressources (1) déterminé par l'identification de module et, en cas de présence de suffisamment de ressources libres,
- la transmission d'une seconde instruction de gestion de ressources par la centrale de gestion de ressources (4) par l'intermédiaire d'un réseau de communication (3) au module de ressource (1) déterminé par l'identification de module,
- la fourniture ou la libération de ressources par un mécanisme de contrôle des ressources (111) dans le module de ressources déterminé (1) selon la seconde instruction de gestion de ressources reçue,
- la transmission d'une confirmation de gestion de ressources par le module de ressources (1) déterminé par l'intermédiaire du réseau de communication (3) à la centrale de gestion de ressources (4), et
- le stockage d'informations concernant les ressources fournies ou libérées dans la centrale de gestion de ressources (4), les informations étant stockées de manière associée à l'identification de module.

2. Procédé selon la revendication 1, **caractérisé en ce que** l'identification de module et une demande d'application sont transmises à une unité de gestion d'application (5) par l'utilisateur du terminal de communication (2), **en ce que** la première instruction de gestion de ressources est transmise à la centrale de gestion de ressources (4) par l'unité de gestion d'application (5) sur la base de la demande d'application reçue, la première instruction de gestion de ressources comprenant une identification de l'utilisateur de ressources, et **en ce que** l'identification de l'utilisateur de ressources est stockée dans la centrale de gestion de ressources (4) de manière associée à l'identification de module.

3. Procédé selon la revendication 2, **caractérisé en ce qu'**une confirmation de fourniture de ressources est transmise par la centrale de gestion de ressources (4) à l'unité de gestion d'application (5), **en ce qu'**une demande d'installation d'application est transmise par l'unité de gestion d'application (5) par l'intermédiaire du réseau de communication (3) au module de ressources (1) déterminé, **en ce qu'**une application est installée par le mécanisme de contrôle de ressources (111) dans le module de ressources (1) déterminé selon la demande d'installation d'application par utilisation des ressources fournies, et **en ce que** des informations concernant l'application installée sont stockées dans l'unité de gestion d'application (5), les informations étant stockées de manière associée à l'identification de module.

4. Procédé selon la revendication 1 ou 2, **caractérisé en ce qu'**une demande d'installation d'application est insérée dans la seconde instruction de gestion de ressources dans la centrale de gestion de ressources (4), **en ce qu'**une application est installée par le mécanisme de contrôle de ressources (111) dans le module de ressources (1) déterminé selon la demande d'installation d'application, et **en ce que** les informations concernant l'application installée sont stockées dans la centrale de gestion de ressources (4), les informations étant stockées de manière associée à l'identification de module.

5. Procédé selon l'une quelconque des revendications 1 à 4, **caractérisé en ce que** l'adresse de communication du terminal de communication (2) est déterminée à partir d'une mémoire de données (32) dans laquelle sont stockées des identifications de modules et des adresses de communication associées à ces identifications de modules.

6. Procédé selon l'une quelconque des revendications 1 à 5, **caractérisé en ce que** des ressources logicielles (113) des modules de ressources (1) sont également gérées.

7. Système de gestion de ressources de modules de ressources portables (1, 1') qui sont chacun reliés à un terminal de communication (2, 2', 2"), qui comprennent chacun un mécanisme de contrôle de ressources (111) destiné à la fourniture et à la libération de ressources dans le module de ressources (1, 1') concerné, les ressources comprenant des unités de stockage électroniques (11), et qui sont notamment réalisées sous la forme de cartes à puces, **caractérisé en ce que** :
le système comprend une centrale de gestion de ressources (4) comportant un module de réception (43) destiné à recevoir une première instruction de gestion de ressources transmise à la centrale de gestion de ressources (4), laquelle instruction comprend une identification de module destinée à déterminer l'un des modules de ressources (1) et des données concernant des ressources fournies ou libérées,
**en ce que** la centrale de gestion de ressources (4) comprend un module d'instruction de gestion (44) destiné à vérifier si le module de ressources (1) déterminé par l'identification de module possède suffisamment de ressources libres, sur la base d'informations stockées concernant les ressources fournies ou libérées du module de ressources (1) déterminé par l'identification de module, et dans le cas où les ressources libres sont suffisantes, à transmettre une seconde instruction de gestion de ressources par l'intermédiaire du réseau de communication (3) relié à la centrale de gestion de ressources (4) au module de ressources (1) déterminé par l'identification de module,
**en ce que** la centrale de gestion de ressources (4) comprend des moyens destinés à recevoir du module de ressources (1) déterminé une confirmation de gestion de ressources par l'intermédiaire du réseau de communication (3) concernant des ressources qui ont été fournies ou libérées par le mécanisme de contrôle de ressources (111) selon une seconde instruction de gestion de ressources reçue, et
**en ce que** la centrale de gestion de ressources (4) comprend un module de gestion (45) et une mémoire de données (41) destinée à stocker des informations concernant les ressources fournies ou libérées, les informations étant stockées de manière associée à l'identification de module.

8. Système selon la revendication 7, **caractérisé en ce que** le système comprend une unité de gestion d'application (5) destinée à recevoir l'identification de module et une demande d'application de l'utilisateur du terminal de communication (2) et à transmettre la première instruction de gestion de ressources à la centrale de gestion de ressources (4) sur la base de la demande d'application reçue, la première instruction de gestion de ressources comprenant une identification de l'utilisateur de ressources, et **en ce que** le module de gestion (45) comprend des moyens destinés à stocker l'identification de l'utilisateur de ressources dans la mémoire de données (41) de manière associée à l'identification de module.

9. Système selon la revendication 8, **caractérisé en ce que** la centrale de gestion de ressources (4) comprend un module de confirmation (46) destiné à transmettre une confirmation de gestion de ressources à l'unité de gestion d'application (5), **en ce que** l'unité de gestion d'application (5) comprend un module d'instruction d'application (54) destiné à transmettre une demande d'installation d'application par l'intermédiaire du réseau de communication (3) au module de ressources (1) déterminé, **en ce que** le mécanisme de contrôle de ressources (111) comprend des moyens destinés à installer une application dans le module de ressources (1) concerné selon la demande d'installation d'application et par utilisation de ressources fournies, et **en ce que** l'unité de gestion d'application (5) comprend un module de gestion d'application (55) destiné à stocker des informations concernant l'application installée, les informations étant stockées de manière associée à l'identification de module.

10. Système selon la revendication 7 ou 8, **caractérisé en ce que** le module d'instruction de gestion (44) comprend des moyens destinés à insérer une demande d'installation d'application dans la seconde instruction de gestion de ressources, **en ce que** le mécanisme de contrôle de ressources (111) comprend des moyens destinés à installer une application dans le module de ressources (1) concerné selon la demande d'installation d'application, et **en ce que** le module de gestion (45) comprend des moyens destinés à stocker des informations concernant l'application installée, les informations étant stockées dans la mémoire de données (41) de manière associée à l'identification de module.

11. Système selon l'une quelconque des revendications 7 à 10, **caractérisé en ce qu'**il comprend une unité de formation d'adresse (31) et une mémoire de données (32) destinées à déterminer l'adresse de communication du terminal de communication (2), mémoire de données (32) dans laquelle sont stockées des identifications de modules et des adresses de communication associées à ces identifications de modules.

12. Système selon l'une quelconque des revendications 7 à 11, **caractérisé en ce que** les ressources qui sont fournies et libérées par le mécanisme de contrôle de ressources (111) comprennent également des ressources logicielles (113).

13. Système selon la revendication 7, **caractérisé en ce que** le module d'instruction de gestion (44) comprend des moyens destinés à insérer une demande d'installation d'application dans la seconde instruction de gestion de ressources, et **en ce que** le module de gestion (45) comprend des moyens destinés à stocker des informations concernant une application installée dans le module de ressources (1) déterminé selon la demande d'installation d'application, les informations étant stockées dans la mémoire de données (41) de manière associée à l'identification de module.

14. Système selon la revendication 7, **caractérisé en ce que** la centrale de gestion de ressources (4) comprend un module de confirmation (46) destiné à transmettre une confirmation de fourniture de ressources à une unité de gestion d'application (5) de laquelle la première instruction de gestion de ressources a été reçue par l'intermédiaire du module de réception (43), **en ce que** le module de gestion (45) comprend des moyens destinés à stocker une identification de l'utilisateur de ressources contenues dans la première instruction de gestion de ressources, l'identification de l'utilisateur de ressources étant stockée dans la mémoire de données (41) de manière associée au module d'identification.
